# EUROPEAN PATENT APPLICATION

(11) **EP 1 782 967 A1**
(43) Date of publication of application: **09.05.2007**
(21) Application number: 03706213.0
(22) Date of filing: 31.01.2003
(51) Int. Cl.: B60C 7/00, B60C 19/12, B60B 21/00

(54) **A WHEEL WITH TWO TIRES**

(71) Applicant: Su, Shuilai, Dashe Toen, Gaoxiong Taiwan (TW)
(72) Inventor: Su, Shuilai, Dashe Toen, Gaoxiong Taiwan (TW)
(74) Representative: Viering, Jentschura & Partner
(86) International application number: PCT/CN2003/000118
(87) International publication number: WO 2004/067298

(57) **Abstract**

A wheel (1) has a wheel rim (10), a positioning lid (20), an inner tire (30) and an outer tire (40) and a sealing loop (50). The wheel rim (10) has a disc (11) and an outer rim (12) mounted on the disc (11). The outer rim (12) has multiple recesses (17) and a flange (13) extending from one end of the outer rim (12). The positioning lid (20) is attached to the outer rim (12) and has a flange (23) formed on an outer side of the positioning lid (20). The inner tire (30) is mounted around the outer rim (12) and has engaging blocks (31) held respectively inside the recesses (17). The outer tire (40) is squeezed between the flanges (13,23) on the outer rim (12) and the positioning lid (20). Accordingly, to replace the tires (30,40) is rapid and convenient.

## Description

### 1. Field of the Invention

The present invention relates to a wheel, especially to a wheel with two tire and that can keep the tires from exploding during a vehicle in travel and has a capability of replacing tires rapidly and conveniently.

### 2. Description of Related Art

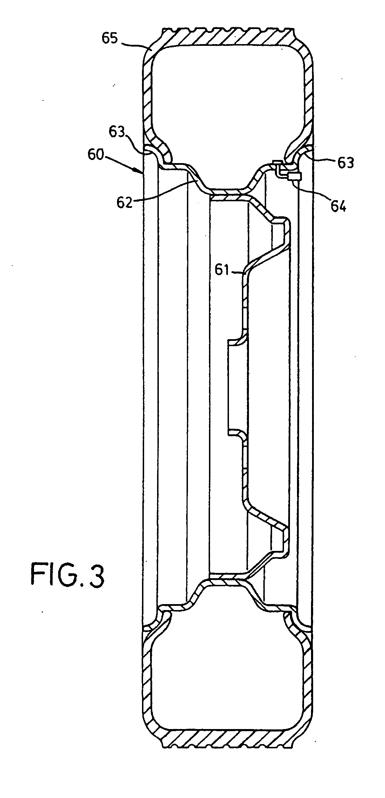

A conventional wheel with two tires comprises an outer tire with grooves in an outer surface thereof and an inflatable inner tire mounted inside the outer tire. A nozzle is mounted on the inner tire and extends out of the outer tire. However, the conventional wheel with inner and outer tires cannot bear the loading generating during the travel of the vehicle at a high speed. Therefore, a wheel with multiple layers of elements, so called "high speed tire" is always applied on a vehicle. With reference to Fig. 3, a conventional wheel comprises a wheel rim having a disc 61. The disc 61 has multiple securing holes defined in the surface for bolts extending through the securing holes to mount the disc to a wheel axle on the vehicle. An outer rim 62 is integrally attached to an outer periphery of the disc 61. Two flanges 63 are respectively formed and extend from two side edges of the outer rim 62, such that a tire 65 is securely mounted between the flanges 63. A nozzle 64 is attached to an inner periphery of the outer rim for inflating the tire 65.

Although the conventional wheel can keep from exploding like as the conventional wheel with two tires, the tire is easily worn off to thin the thickness of the tire because that the tire is made of rubber plastic. The tire still explode when a sharp object pierces into the tire. When the tire explodes, the compressed air will explode from the tire at a short time to cause the vehicle inclined and that a driver cannot control the vehicle, so that an accident easily occurs.

To overcome the shortcomings, the present invention provides a wheel with two tires that can keep the wheel from exploding during the travel of the vehicle and to prevent accident from occurring and can be replaced rapidly and conveniently.

The main objective of the present invention is to provide a wheel with two tires that can keep the wheel from exploding during the travel of the vehicle and to prevent accident from occurring and can be replaced rapidly and conveniently. The wheel comprises a wheel rim, a positioning lid, an inner tire, an outer tire and a sealing loop. The wheel rim has disc adapted for being mounted on a wheel axle of a vehicle. An outer rim is mounted on an outer periphery of the disc. The outer rim has multiple recesses defined in an outer periphery of the outer rim and a flange extending from one end of the outer rim. The inner tire is mounted around the outer rim and having engaging blocks held respectively inside the recesses. The outer tire is mounted around the inner tire and is squeezed between the flanges on the outer rim and the positioning lid. When the outer tire explodes, the inner tire can keep the vehicle traveling in stable for a while. When replacing the inner or outer tire, to press the inner or outer tire between the flanges on the outer rim is unnecessary, such that to replace the tires is rapid and convenient.

Other objectives, advantages and novel features of the invention will become more apparent from the following detailed description when taken in conjunction with the accompanying drawings.

### IN THE DRAWINGS

Fig.1 is an exploded perspective view of a wheel in accordance with the present invention;
Fig.2 is a side plan view in partial cross section of the wheel in Fig. 1; and
Fig.3 is a side plan view of a conventional wheel in accordance with the prior art.

| | | | |
|---|---|---|---|
| 1: | wheel | 10: | wheel rim |
| 11: | disc | 12: | outer rim |
| 13: | flange | 14: | sealing groove |
| 15: | threaded hole | 16: | annular neck |
| 17: | recess | 20: | positioning lid |
| 21: | sealing groove | 22: | positioning hole |
| 23: | flange | 24: | nozzle |
| 30: | inner tire | 31: | engaging block |
| 40: | outer tire | 50: | sealing loop |
| 60: | wheel | 61: | disc |
| 62: | outer rim | 63: | flange |
| 64: | nozzle | 65: | tire |

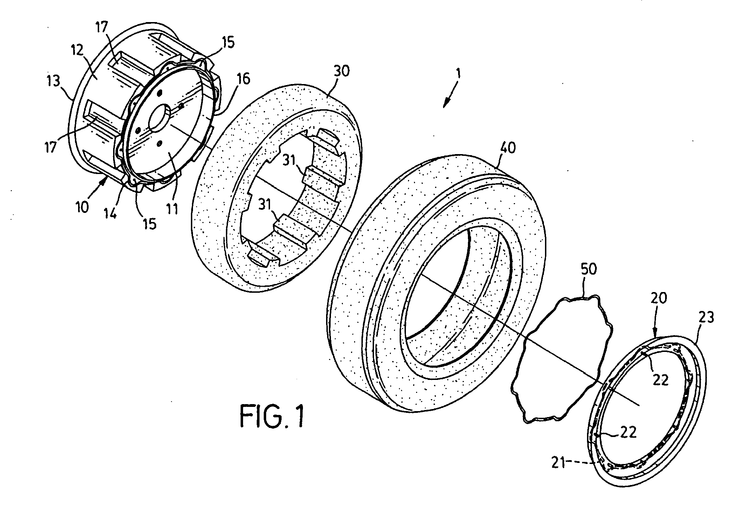

With reference to Fig.1, a wheel 1 with tow tires in accordance with the present invention comprises a wheel rim 10, a positioning lid 20, an inner tire 30, an outer tire 40 and a sealing loop 50.

The wheel rim 10 has a disc 11. the disc 11 has multiple securing holes defined in a surface of the disc 11. An outer rim 12 is formed on an outer periphery of the disc 11. An annular flange 13 is formed on and extends radially from one end of the outer rim 12, and a sealing groove 14 and multiple threaded holes 15 are defined in the other end of the outer rim 12. The sealing groove 14 can be annular or irregular shaped as shown in the drawings. An annular neck 16 extends outward from the outer rim 13 at the end with the sealing grove 14. In addition, multiple recesses 17 are defined in the outer periphery of the outer rim 12 at the end adjacent to the sealing groove 14.

The positioning lid 20 is hollow and annular and has a sealing groove 21 defined in one side thereof and aligning with the sealing groove 14 on the wheel rim 10. The positioning lid 20 further has multiple positioning holes aligning respectively with the threaded holes 15 in the wheel rim 10. A flange 23 is formed and extends outward from the outer side of the positioning lid 20, and a nozzle 23 is mounted on the positioning lid 20.

The inner tire 30 is made of rubber plastic, is annular but solid and has multiple engaging blocks 31 corresponding respectively to the recesses 17 in the wheel rim 10. The outer tire 40 is made of rubber plastic, is annular and hollow and has an opening defined in an inner periphery.

The sealing loop 50 is made of rubber plastic and is held inside the sealing grooves 14,21 in the wheel rim 10 and the positioning lid 20.

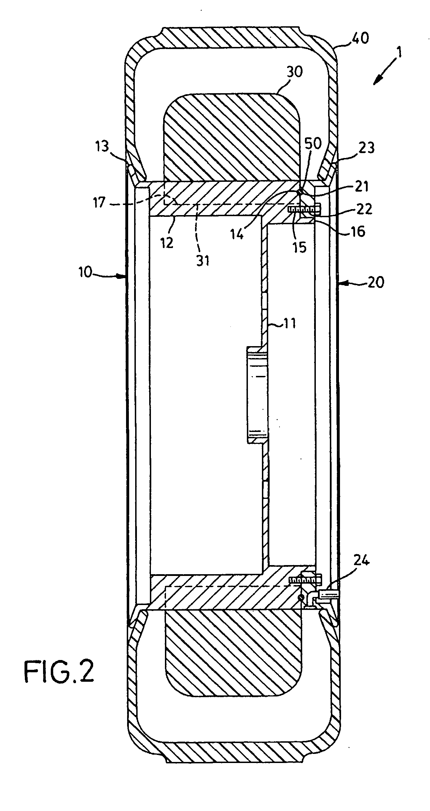

With further reference to Fig. 2, in assembling, the inner tire 30 is firstly put into the outer tire 40, the inner and outer tires 30,40 are simultaneously attached around the outer periphery of the outer rim 12 of the wheel rim 10 to make the engaging blocks 17 be held respectively inside the recesses 17 in the wheel rim 10. Consequently, the inner tire 30 can combine and rotate with the outer rim 12. Then, the sealing loop 50 is mounted inside the sealing groove 14 in the wheel rim 10, and the positioning lid 20 is mounted around the flange 16 on the wheel rim 10 to securely hold the sealing loop 50 in the sealing groove 21 in the positioning lid 20. Multiple bolt extend respectively through the positioning holes 22 and are respectively screwed into the threaded holes 15, such that a wheel 1 is provided.

In such an arrangement as described, a wheel with tires in accordance with the present invention has advantages as follows:
1. To keep tire exploding and to prevent accident from occurring during the travel of a vehicle.
   Because a solid inner tire is mounted in the wheel, exploding of the tire can be prevented with the inner tire when the outer tire is worn off or a sharp object piercing into the outer tire. Accordingly, the vehicle can be driven in stably for a while until the driver stop the vehicle, such that the safety of driving the vehicle is improved.
2. To replace the wheel is easy and convenient.

Because a positioning lid is mounted on one side of the wheel rim, the flanges for positioning the outer tire are formed respectively on the outer rim and the positioning lid. Therefore, the inner and outer tire can be attached to the wheel rim from one side of the wheel rim, and the positioning lid is secured to the wheel rim with bolts. Accordingly, to press the inner and outer tires between flanges on the outer rim as the prior art is not necessary.

## Claims

1. A wheel (1) with two tires comprising a wheel rim (10), a positioning lid (20), an inner tire (30), an outer tire (40) and a sealing loop (50), wherein
the wheel rim (10) has a disc (11) adapted for being mounted on a wheel axle of a vehicle, the disc (11) has an outer rim (12) formed on an outer periphery of the disc (11), a flange (13) extends from one end of the outer rim (12), and a sealing groove (14) and multiple threaded holes (15) are defined in the other end of the outer rim (12), and multiple recesses (17) are defined in an outer periphery of the outer rim (12) at the end adj acent to the sealing groove (14);
the positioning lid (20) has a shape corresponding to that of the wheel rim (10) at the end with the sealing groove (14) and has a sealing groove (21) aligning with the sealing groove (14) on the wheel rim (10) and multiple positioning holes (22) aligning respectively with the threaded holes (15) in the wheel rim (10) for bolts extending respectively through the positioning holes (22), a flange (23) is formed at and extends from one side of the positioning lid (20) and a nozzle (24) is mounted on the positioning lid (20);
the inner tire (30) is annular but solid, is mounted around the outer periphery of the outer rim (12) and has multiple engaging blocks (31) corresponding respectively to the recesses (17) in the wheel rim (10);
the outer tire (40) is annular and hollow, has an opening defined in an inner periphery, is mounted around the outer periphery of the outer rim (12) and is squeezed between the flanges (13,23) on the wheel rim (10) and the positioning lid (20); and
the sealing loop (50) is held inside the sealing grooves (14,21) in the wheel rim (10) and the positioning lid (20).

2. The wheel with two tires as claimed in claim 1, wherein an annular neck (16) extends outward from the outer rim (12) at the end with the sealing grove (14).
